# EUROPEAN PATENT APPLICATION

(11) **EP 4 239 752 A1**
(43) Date of publication of application: **06.09.2023**
(21) Application number: 21886877.6
(22) Date of filing: 29.10.2021
(51) Int. Cl.: H01M 10/0585, H01M 10/42, H01M 4/62, H01M 4/66, H01M 10/052, H01M 10/0565, H01M 10/0562

(54) **BIPOLAR SOLID-STATE BATTERY COMPRISING POROUS SUPPORT LAYER**

(30) Priority: 29.10.2020 KR 20200142129; 06.11.2020 KR 20200147423
(71) Applicant: LG Energy Solution, Ltd., Seoul 07335 (KR)
(72) Inventor: LEE, Jung Pil, Daejeon 34122 (KR); RYU, Ji Hoon, Daejeon 34122 (KR); SUNG, In Hyouk, Daejeon 34122 (KR); LEE, Suk Woo, Daejeon 34122 (KR)
(74) Representative: Goddar, Heinz J.
(86) International application number: PCT/KR2021/015404
(87) International publication number: WO 2022/092883

(57) **Abstract**

The present invention relates to a bipolar all-solid-state battery including a porous support layer, and more particularly to a bipolar all-solid-state battery including (a) two or more unit cells each including a positive electrode, a solid electrolyte, and a negative electrode being connected to each other in series and a first porous support layer provided at the middle of the interface therebetween or (b) two or more unit cells each including a positive electrode, a solid electrolyte, and a second porous support layer being connected to each other in series.

## Description

### [Technical Field]

This application claims the benefit of priority to Korean Patent Application No. 2020-0142129 filed on October 29, 2020 and Korean Patent Application No. 2020-0147423 filed on November 6, 2020, the disclosures of which are incorporated herein by reference in their entireties.

The present invention relates to a bipolar all-solid-state battery including a porous support layer. More particularly, the present invention relates to a bipolar all-solid-state battery configured such that (a) two or more unit cells each including a positive electrode, a solid electrolyte, and a negative electrode are connected to each other in series and a first porous support layer is provided at the middle of the interface therebetween or (b) two or more unit cells each including a positive electrode, a solid electrolyte, and a second porous support layer are connected to each other in series.

### [Background Art]

A bipolar battery has advantages in that the volume of a case is minimized, whereby energy density of the battery is high, performance of the battery is stable, and inner resistance of the battery is low. In general, the bipolar battery has a bipolar electrode configured to connect one unit cell and unit cells adjacent thereto to each other in series, wherein the bipolar electrode includes a bipolar electrode layer and a bi-plate. The bi-plate may be made of a material that has conductivity sufficient to transfer current between the unit cells, is chemically stable in the battery, and has excellent contactability with an electrode. The bi-plate is easily corroded by a high-dielectric electrolytic solution mainly used in a lithium secondary battery, the corroded bi-plate lowers electrolytic solution sealability and insulation between the unit cells, induces internal short circuit, and eventually deteriorates safety of the battery.

In order to solve the problem, a bipolar all-solid-state battery using no electrolytic solution is presented as an alternative. Unlike conventional secondary batteries, the bipolar all-solid-state battery has a solid electrolyte, and the solid electrolyte is disposed between a positive electrode and a negative electrode so as to serve as a separator.

Since the all-solid-state battery uses a solid electrolyte instead of a liquid electrolytic solution used in a conventional battery, evaporation of the electrolytic solution due to a change in temperature or leakage of the electrolytic solution due to external impact does not occur, whereby explosion or ignition of the all-solid-state battery is prevented. The contact region between the solid electrolyte and the positive electrode or the negative electrode is limited, whereby formation of the interface between the positive electrode and the solid electrolyte and between the negative electrode and the solid electrolyte is not easy. In the case in which the area of contact between the positive electrode and the solid electrolyte and between the negative electrode and the solid electrolyte is small, as described above, interfacial resistance is reduced by pressing a unit cell including the solid electrolyte.

Meanwhile, in order to increase the density, capacity, and lifespan of the bipolar all-solid-state battery, the bipolar all-solid-state battery may be manufactured using lithium. In the case in which lithium is used, lithium dendrites are formed during charging and discharging, whereby the separator (the solid electrolyte) is damaged, or the lithium dendrites contact the positive electrode, whereby short circuit occurs in the unit cell. Particularly, in the case in which the bipolar all-solid-state battery is pressed, the positive electrode, the solid electrolyte, and the negative electrode become close to each other due to growth of the lithium dendrites, whereby the solid electrolyte is damaged, or short circuit occurs due to reaction between the lithium dendrites and the positive electrode.

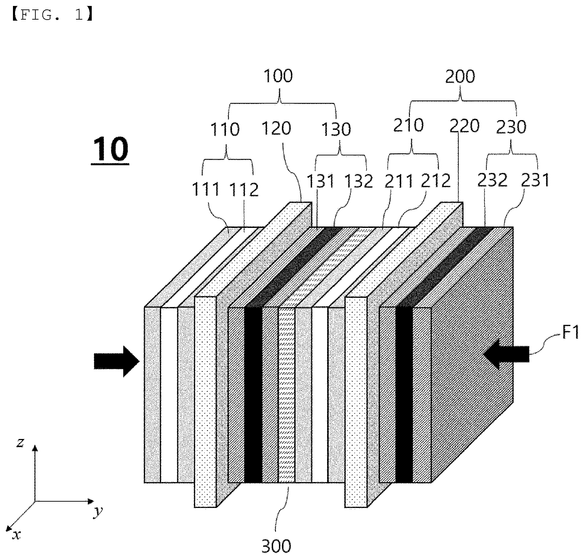

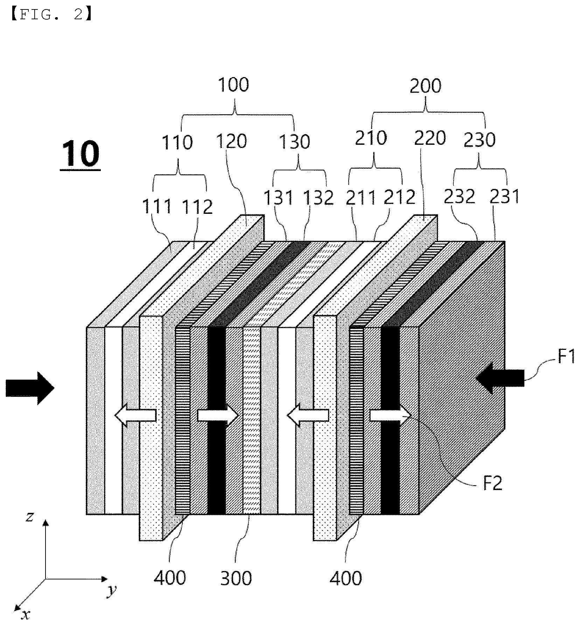

FIG. 1 is a perspective view of a conventional bipolar all-solid-state battery before being charged and discharged, and FIG. 2 is a perspective view of the conventional bipolar all-solid-state battery after being charged and discharged.

The conventional bipolar all-solid-state battery 10 includes a first unit cell 100, which includes a first positive electrode 110 including a first positive electrode active material 111 and a first positive electrode current collector 112, a first solid electrolyte 120, and a first negative electrode 130 including a first negative electrode active material 131 and a first negative electrode current collector 132; a second unit cell 200, which includes a second positive electrode 210 including a second positive electrode active material 211 and a second positive electrode current collector 212, a second solid electrolyte 220, and a second negative electrode 230 including a second negative electrode active material 231 and a second negative electrode current collector 232; and a bipolar electrode 300 configured to connect the first unit cell 100 and the second unit cell 200 to each other in series.

At this time, unlike FIGS. 1 and 2, each of the first positive electrode active material 111, the first negative electrode active material 131, the second positive electrode active material 211, and the second negative electrode active material 231 may be applied to one surface of a corresponding one of the first positive electrode current collector 112, the first negative electrode current collector 132, the second positive electrode current collector 212, and the second negative electrode current collector 132, or no separate electrode active material may applied thereto.

Also, unlike the above construction, there may be provided a bipolar all-solid-state battery configured such that a first negative electrode active material, a bipolar electrode, and a second positive electrode active material are disposed between a first solid electrolyte 120 and a second solid electrolyte 220, which also has the same problems as described below.

In order to reduce interfacial resistance between the first positive electrode 110, the first solid electrolyte 120, and the first negative electrode 130 and the second positive electrode 210, the second solid electrolyte 220, and the second negative electrode 230, the conventional bipolar all-solid-state battery 10 is pressed by y-axis pressing force F1 from a jig during charging and discharging.

In the bipolar all-solid-state battery 10, however, a lithium layer 400 formed during charging and discharging of the first unit cell 100 and the second unit cell 200 is intercalated into the first negative electrode 130 and/or the second negative electrode 230, whereby the active material is expanded, or lithium is deposited on the first negative electrode 130 and/or the second negative electrode 230, whereby the thickness of the bipolar all-solid-state battery 10 is increased.

If the thickness of the bipolar all-solid-state battery 10 is increased, internal pressure F2 of the bipolar all-solid-state battery 10 is increased, whereby the pressing force F1 applied to the first unit cell 100 and the second unit cell 200 is also increased. The reason for this is that, in general, pressing force F1 is generated by the jig, which occupies a certain place, whereby inner volume of the bipolar all-solid-state battery is increased.

As the lithium layer 400 formed due to initial charging and discharging is increased, the force of reaction between the first solid electrolyte 120 and the second solid electrolyte 220 and the lithium layer 400 is increased, and lithium metal of the lithium layer 400 is introduced into the bipolar all-solid-state battery 10 through defects of the first solid electrolyte 120 and the second solid electrolyte 220, whereby a possibility of short circuit occurring in the bipolar all-solid-state battery 10 is increased.

Also, in the case in which the pressing force F1 is increased, the position or shape of the first unit cell 100 and the second unit cell 200 in the bipolar all-solid-state battery 10 may be changed. In the case in which the shape of the bipolar all-solid-state battery 10 or the position of the first unit cell 100 and the second unit cell 200 is changed, the pressing force F1 is not uniformly applied to the first unit cell 100 and the second unit cell 200, whereby a portion may not be pressed or another portion may be excessively pressed.

Patent Document 1, which relates to an all-solid-state thin-film stacked battery, mentions the case in which a plurality of power generation elements is connected to each other in series, wherein the power generation elements are connected to each other in series via an electrode terminal, whereby stress in the thin-film stacked battery is relieved; however, density of the battery is not improved, unlike a bipolar battery according to the present invention.

Therefore, there is a need to prevent damage to a solid electrolyte due to lithium dendrites while reducing stress in a bipolar all-solid-state battery having excellent performance compared to density; however, a definite solution thereto has not yet been proposed.

(Patent Document 1) Japanese Patent Application Publication No. 2004-273436 (2004.09.30) ("Patent Document 1")

### [Disclosure]

### [Technical Problem]

The present invention has been made in view of the above problems, and it is an object of the present invention to prevent damage to a solid electrolyte due to formation of lithium dendrites and occurrence of short circuit in a unit cell due to contact between the lithium dendrites and a positive electrode.

It is another object of the present invention to reduce stress in a bipolar all-solid-state battery, and to improve ionic conductivity, thereby increasing lifespan of the bipolar all-solid-state battery, and to increase density of the bipolar all-solid-state battery.

### [Technical Solution]

In order to accomplish the above objects, the present invention provides a bipolar all-solid-state battery including: (a) two or more unit cells each including a positive electrode, a solid electrolyte, and a negative electrode being connected to each other in series and a first porous support layer provided at the middle of the interface therebetween; or

(b) two or more unit cells each including a positive electrode, a solid electrolyte, and a second porous support layer being connected to each other in series.

The negative electrode of one of the unit cells may be disposed on one surface of the first porous support layer, and the positive electrode of another of the unit cells may be disposed on a surface opposite to the one surface of the first porous support layer. The negative electrode may be a lithium metal or a current collector having no active material layer.

The surface of the second porous support layer that faces the solid electrolyte may serve as a negative electrode, and the surface of the second porous support layer that faces the positive electrode may serve as a separator. The second porous support layer may include a lithium negative electrode or a negative electrode current collector. The negative electrode current collector may be a metal or a metal oxide. The lithium negative electrode or the negative electrode current collector may include no separate active material layer.

The first porous support layer may include one or more of an olefin-based porous substrate and a sheet or non-woven fabric manufactured using one or more selected from the group consisting of glass fiber and polyethylene.

The first porous support layer may comprise one or more layers of the olefin-based porous substrate, the sheet, or the non-woven fabric being stacked. When the first porous support layer includes two or more layers, the respective layers of the first porous support layer may be formed of different materials, or the respective layers of the first porous support layer may be formed of the same material.

Each of the first porous support layer and the second porous support layer is configured such that the thickness thereof is reduced when pressure is applied thereto and the thickness thereof is restored when the pressure is relieved, thereby adjusting stress in the all-solid-state battery. The pressure may be generated as the result of lithium deposition between the negative electrode and the solid electrolyte by lithium ions moved from the positive electrode to the negative electrode by charging; or lithium deposition between the second porous support layer and the solid electrolyte.

The first porous support layer may be configured to adjust stress caused by a change in thickness due to the lithium deposition, and the thickness of the second porous support layer may be greater than the thickness of deposited lithium.

Each of the first porous support layer and the second porous support layer may be configured to adjust the stress in proportion to the thickness and porosity thereof, and the first porous support layer may have a thickness of 20 um to 50 µm.

The positive electrode may include a positive electrode current collector and a positive electrode active material applied to one surface of the positive electrode current collector. The positive electrode active material may face the solid electrolyte, and the positive electrode current collector may face the first porous support layer and the second porous support layer.

The negative electrode of one of the unit cells disposed on one surface of the first porous support layer may be a lithium metal having no separate active material layer, and the positive electrode of another of the unit cells disposed on a surface opposite to the one surface of the first porous support layer may be a positive electrode current collector.

The positive electrode disposed between the second porous support layer and the solid electrolyte, among the positive electrodes, may be constituted by only a positive electrode active material, and the outermost positive electrode at this time may include a positive electrode current collector and a positive electrode active material applied to the surface of the positive electrode current collector that faces the solid electrolyte.

The two or more unit cells may be received in a pouch-shaped battery case, and the two or more unit cells may be pressed by an external jig during charging and discharging thereof.

The bipolar all-solid-state battery comprising the two or more unit cells each including the positive electrode, the solid electrolyte, and the second porous support layer being connected to each other in series, may comprise one or more unit stacks repeatedly provided between the outermost positive electrode and a solid electrolyte that faces the outermost positive electrode and the outermost negative electrode, the unit stack comprising a second porous support layer, a positive electrode active material, and a solid electrolyte.

The bipolar all-solid-state battery comprising the two or more unit cells each including the positive electrode, the solid electrolyte, and the second porous support layer are connected to each other in series may comprise one or more unit stacks repeatedly provided between the outermost positive electrode and a solid electrolyte that faces the outermost positive electrode and the outermost negative electrode, the unit stack comprising a second porous support layer, a positive electrode current collector, a positive electrode active material, and a solid electrolyte.

The present invention may provide a battery module or a battery pack including the bipolar all-solid-state battery. In addition, the present invention may provide a device in which the bipolar all-solid-state battery is mounted.

In the present invention, one or more constructions that do not conflict with each other may be selected and combined from among the above constructions.

### [Advantageous Effects]

As is apparent from the above description, in a bipolar all-solid-state battery according to the present invention, it is possible to reduce stress generated in the bipolar all-solid-state battery due to formation of a lithium layer, whereby it is possible to prevent damage to a solid electrolyte or reaction between a positive electrode and lithium dendrites of the lithium layer, and therefore it is possible to reduce cell short circuit in the bipolar all-solid-state battery.

Also, in the bipolar all-solid-state battery, only a negative electrode current collector is used as a negative electrode, a positive electrode current collector and a positive electrode active material applied to one surface thereof are used as the positive electrode, and unit cells constituted thereby are connected to each other in series via a first porous support layer, whereby it is possible to increase the capacity of the battery based on density thereof while improving performance of the battery.

In addition, the bipolar all-solid-state battery has a second porous support layer that serves as a negative electrode and a separator, and the second porous support layer relieves stress in the bipolar all-solid-state battery, whereby it is possible to obtain a bipolar all-solid-state battery that has improved safety and high density.

Furthermore, pressure applied to the unit cell in the bipolar all-solid-state battery is maintained uniform, whereby it is possible to prevent damage to the unit cell and to increase ionic conductivity of the unit cell, and therefore it is possible to increase the lifespan of the battery.

### [Description of Drawings]

FIG. 1 is a perspective view of a conventional bipolar all-solid-state battery before being charged and discharged.
FIG. 2 is a perspective view of the conventional bipolar all-solid-state battery after being charged and discharged.
FIG. 3 is a perspective view of a bipolar all-solid-state battery according to a first example of the present invention before being charged and discharged.
FIG. 4 is a perspective view of the bipolar all-solid-state battery according to the first example of the present invention after being charged and discharged.
FIG. 5 is a sectional view of an all-solid-state battery used in Experimental Example 2 of the present invention.
FIG. 6 is a perspective view of a bipolar all-solid-state battery according to a second example of the present invention before being charged and discharged.
FIG. 7 is a perspective view of the bipolar all-solid-state battery according to the second example of the present invention after being charged and discharged.
FIG. 8 is a sectional view of an all-solid-state battery used in Experimental Example 4 of the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

In addition, all numeric ranges include the lowest value, the highest value, and all intermediate values therebetween unless the context clearly indicates otherwise.

Each of an active material, a current collector, and a solid electrolyte mentioned in connection with FIGS. 1 to 8 does not simply mean a material but means a layer including the same.

A bipolar all-solid-state battery according to the present invention is characterized in that: (a) two or more unit cells each including a positive electrode, a solid electrolyte, and a negative electrode are connected to each other in series and a first porous support layer is provided at the middle of the interface therebetween; or

(b) two or more unit cells each including a positive electrode, a solid electrolyte, and a second porous support layer are connected to each other in series.

A negative electrode of one unit cell may be disposed on one surface of the first porous support layer, a positive electrode of another unit cell may be disposed on the opposite surface thereof, and the negative electrode may be a lithium metal or a current collector having no active material layer.

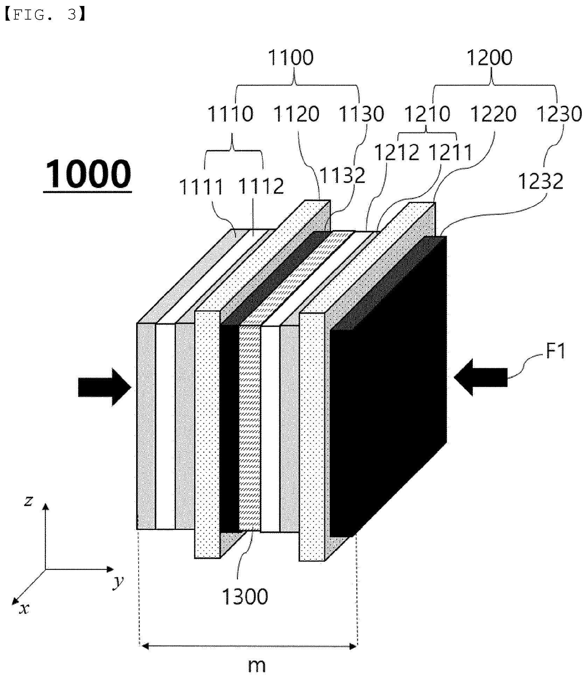

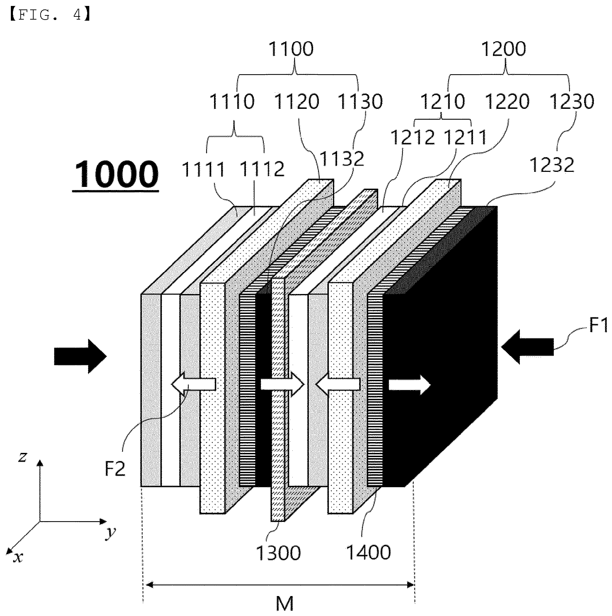

A bipolar all-solid-state battery configured such that (a) two or more unit cells each including a positive electrode, a solid electrolyte, and a negative electrode are connected to each other in series and a first porous support layer is provided at the middle of the interface therebetween as a first example of the bipolar all-solid-state battery according to the present invention will be described with reference to FIGS. 3 and 4.

FIG. 3 is a perspective view of a bipolar all-solid-state battery 1000 according to a first example of the present invention before being charged and discharged, and FIG. 4 is a perspective view of the bipolar all-solid-state battery 1000 according to the first example of the present invention after being charged and discharged.

In FIGS. 3 and 4, the unit cells are shown as a first unit cell 1100 and a second unit cell 1200 for convenience of description. However, the unit cells may include a plurality of first unit cells 1100 and a plurality of second unit cells 1200.

The bipolar all-solid-state battery 1000 according to the present invention includes a first unit cell 1100 and a second unit cell 1200. The first unit cell 1100 is constituted by a first positive electrode 1110 including a first positive electrode active material 1111 and a first positive electrode current collector 1112; a first solid electrolyte 1120; and a first negative electrode 1130 including a first negative electrode current collector 1132. The second unit cell 1200 is constituted by a second positive electrode 1210 including a second positive electrode active material 1211 and a second positive electrode current collector 1212; a second solid electrolyte 1220; and a second negative electrode 1230 including a second negative electrode current collector 1232. Between the first unit cell 1100 and the second unit cell 1200 is disposed a first porous support layer 1300 configured to connect the unit cells to each other in series. The first negative electrode 1130 of the first unit cell 1100 is disposed on one surface of the first porous support layer 1300, and the second positive electrode 1210 of the second unit cell 1200 is disposed on the other surface of the first porous support layer 1300, i.e. the surface of the first porous support layer that is opposite the first negative electrode 1130.

The first positive electrode 1110 may be manufactured, for example, using a method of applying a positive electrode mixture of a positive electrode active material constituted by positive electrode active material particles, a conductive agent, and a binder to the first positive electrode current collector 1112 to form the first positive electrode active material 1111. A filler may be further added to the positive electrode mixture as needed.

In general, the first positive electrode current collector 1112 is manufactured so as to have a thickness of 3 um to 500 um. The first positive electrode current collector is not particularly restricted as long as the first positive electrode current collector exhibits high conductivity while the first positive electrode current collector does not induce any chemical change in a battery to which the first positive electrode current collector is applied. For example, the first positive electrode current collector may be made of stainless steel, aluminum, nickel, or titanium. Alternatively, the positive electrode current collector may be made of aluminum or stainless steel, the surface of which is treated with carbon, nickel, titanium, or silver. Specifically, aluminum may be used. The current collector may have a micro-scale uneven pattern formed on the surface thereof so as to increase adhesive force of the positive electrode active material. The current collector may be configured in any of various forms, such as a film, a sheet, a foil, a net, a porous body, a foam body, and a non-woven fabric body.

In addition to the positive electrode active material particles, the positive electrode active material included in the first positive electrode active material 1111 may be constituted, for example, by a layered compound, such as lithium nickel oxide (LiNiO₂), or a compound substituted with one or more transition metals; a lithium manganese oxide represented by the chemical formula Li₁₊ₓMn₂₋ₓO₄ (where x = 0 to 0.33) or lithium manganese oxide, such as LiMnOs, LiMn₂O₃, or LiMnO₂; lithium copper oxide (Li₂CuO₂); vanadium oxide, such as LiV₃O₈, LiV₃O₄, V₂O₅, or Cu₂V₂O₇; an Ni-sited lithium nickel oxide represented by the chemical formula LiNi₁₋ₓMₓO₂ (where M = Co, Mn, Al, Cu, Fe, Mg, B, or Ga, and x = 0.01 to 0.3); a lithium manganese composite oxide represented by the chemical formula LiMn₂₋ₓMₓO₂ (where M = Co, Ni, Fe, Cr, Zn, or Ta, and x = 0.01 to 0.1) or the chemical formula Li₂Mn₃MO₈ (where M = Fe, Co, Ni, Cu, or Zn); LiMn₂O₄ in which a portion of Li in the chemical formula is replaced by alkaline earth metal ions; a disulfide compound; or Fe₂(MoO₄)₃. However, the present invention is not limited thereto.

However, it is preferable for the positive electrode active material 1111 used in the present invention to use a metal oxide including lithium or to include the same in order to deposit lithium on the first negative electrode 1130.

The conductive agent is generally added so that the conductive agent accounts for 0.1 to 30 weight% based on the total weight of the compound including the positive electrode active material. The conductive agent is not particularly restricted as long as the conductive agent exhibits high conductivity without inducing any chemical change in a battery to which the conductive agent is applied. For example, graphite, such as natural graphite or artificial graphite; carbon black, such as carbon black, acetylene black, Ketjen black, channel black, furnace black, lamp black, or thermal black; conductive fiber, such as carbon fiber or metallic fiber; metallic powder, such as carbon fluoride powder, aluminum powder, or nickel powder; conductive whisker, such as zinc oxide or potassium titanate; a conductive metal oxide, such as titanium oxide; or a conductive material, such as a polyphenylene derivative, may be used as the conductive agent.

The binder, which is included in the first positive electrode 1110, is a component assisting in binding between the active material and the conductive agent and in binding with the current collector. The binder is generally added in an amount of 0.1 to 30 weight% based on the total weight of the mixture including the positive electrode active material. As examples of the binder, there may be used polyvinylidene fluoride, polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene terpolymer (EPDM), sulfonated EPDM, styrene butadiene rubber, fluoro rubber, and various copolymers.

The first positive electrode 1110 may be configured to have a structure in which the first positive electrode active material 1111 is formed on at least one surface of the first positive electrode current collector 1112. In the case in which the first positive electrode 1110 is located at the outermost side of the bipolar all-solid-state battery 1000, the first positive electrode 1110 may be configured to have a structure in which the first positive electrode active material 1111 is applied to two opposite surfaces of the first positive electrode current collector 1112. Also, in the case in which the first positive electrode 1110 faces another unit cell of the bipolar all-solid-state battery 1000, the first positive electrode 1110 may be configured to have a structure in which the first positive electrode active material 1111 is applied to only one surface of the first positive electrode current collector 1112.

The second positive electrode 1210 may be formed in the same manner as in the first positive electrode 1110. However, the second positive electrode 1210 faces a unit cell of the bipolar all-solid-state battery 1000, and the second positive electrode active material 1211 is formed on only one surface of the second positive electrode current collector 1212 of the second positive electrode 1210.

The second positive electrode active material 1211 of the second positive electrode 1210 disposed on the other surface of the first porous support layer 1300 faces the second solid electrolyte 1220, and the second positive electrode current collector 1212 faces the first porous support layer 1300. Consequently, the unit cells of the bipolar all-solid-state battery 1000 are connected to each other in series via the first porous support layer 1300.

An organic solid electrolyte or an inorganic solid electrolyte may be used as each of the first solid electrolyte 1120 and the second solid electrolyte 1220. However, the present invention is not limited thereto.

For example, a polyethylene derivative, a polyethylene oxide derivative, a polypropylene oxide derivative, a phosphoric acid ester polymer, poly agitation lysine, polyester sulfide, polyvinyl alcohol, polyvinylidene fluoride, or a polymer containing an ionic dissociation group may be used as the organic solid electrolyte.

As an example, the inorganic solid electrolyte may be a sulfide-based solid electrolyte or an oxidebased solid electrolyte.

For example, a nitride or halide of Li, such as Li_{6.25}La₃Zr₂A_{10.25}O₁₂, Li₃PO₄, Li₃+xPO₄-xNₓ(LiPON), Li₃N, LiI, Li₅NI₂, Li₃N-LiI-LiOH, LiSiO₄, LiSiO₄-LiI-LiOH, Li₂SiS₃, Li₄SiO₄, or Li₄SiO₄-LiI-LiOH, may be used as the oxidebased solid electrolyte.

In the present invention, the sulfide-based solid electrolyte is not particularly restricted, and all known sulfide-based materials used in the field of lithium batteries may be employed. Products on the market may be used as the sulfide-based materials, or amorphous sulfide-based materials may be crystallized to manufacture the sulfide-based materials. For example, a crystalline sulfide-based solid electrolyte, an amorphous sulfide-based solid electrolyte, or a mixture thereof may be used as the sulfide-based solid electrolyte. There are a sulfur-halogen compound, a sulfur-germanium compound, and a sulfur-silicon compound as examples of available composite compounds. Specifically, a sulfide, such as SiS₂, GeS₂, or B₂S₃, may be included, and Li₃PO₄, halogen, or a halogen compound may be added. Preferably, a sulfide-based electrolyte capable of implementing a lithium ion conductivity of 10⁻⁴ S/cm or more is used.

Typically, Li₆PS₅Cl (LPSCl), Thio-LISICON (Li_{3.25}Ge_{0.25}P_{0.75}S₄), Li₂S-P₂S₅-LiCl, Li₂S-SiS₂, LiI-Li₂S-SiS₂, LiI-Li₂S-P₂S₅, LiI-Li₂S-P₂O₅, LiI-Li₃PO₄-P₂S₅, Li₂S-P₂S₅, Li₃PS₄, Li₇P₃S₁₁, LiI-Li₂S-B₂S₃, Li₃PO₄-Li₂S-Si₂S, Li₃PO₄-Li₂S-SiS₂, LiPO₄-Li₂S-SiS, Li₁₀GeP₂Si₂, Li_{9.54}Si_{1.74}P_{1.44}S_{11.7}Cl_{0.3}, and Li₇P₃S₁₁ are included.

A coating layer configured to induce formation of lithium dendrites may be provided on the surface of each of the first solid electrolyte 1120 and the second solid electrolyte 1220 that faces a corresponding one of the first negative electrode 1130 and the second negative electrode 1230.

The coating layer may include a metal in order to improve electrical conductivity and ionic conductivity. The kind of the metal is not limited as long as the metal enables lithium dendrites to be formed between the coating layer and the first negative electrode current collector 1132 or between the coating layer and the second negative electrode current collector 1232 while improving performance of the first negative electrode 1130 or the second negative electrode 1230. At this time, the metal may be lithiophilic so as to induce lithium dendrites to be formed between the coating layer and the first negative electrode current collector 1132 or between the coating layer and the second negative electrode current collector 1232.

At this time, the lithiophilic metal may be disposed on the surface of the coating layer that faces the first negative electrode 1130 or the second negative electrode 1230 such that no lithium dendrites grow in a direction toward the first solid electrolyte 1120 or the second solid electrolyte 1220.

In the case in which the lithiophilic metal is located on the coating layer, lithium plating is performed on the lithiophilic metal, whereby a lithium nucleus is formed, and lithium dendrites grow from the lithium nucleus on only the coating layer.

One or more of a metal and a metal oxide may be selected as the lithiophilic material. For example, the metal may be gold (Au), silver (Ag), platinum (Pt), zinc (Zn), silicon (Si), or magnesium (Mg), and the metal oxide may be copper oxide, zinc oxide, or cobalt oxide, which is a nonmetal.

The first negative electrode 1130 according to the present invention may be constituted by only the first negative electrode current collector 1132.

The first negative electrode current collector 1132 is generally manufactured so as to have a thickness of 3 um to 500 um. The first negative electrode current collector 1132 is not particularly restricted as long as the first negative electrode current collector exhibits conductivity while the first negative electrode current collector does not induce any chemical change in a battery to which the first negative electrode current collector is applied. The first negative electrode current collector 1132 may be an electrode current collector without lithium metal or a separate negative electrode active material layer. For example, the first negative electrode current collector may be made of copper, stainless steel, aluminum, nickel, titanium, or sintered carbon. Alternatively, the first negative electrode current collector may be made of copper or stainless steel, the surface of which is treated with carbon, nickel, titanium, or silver, or an aluminum-cadmium alloy. In addition, the first negative electrode current collector may have a micro-scale uneven pattern formed on the surface thereof so as to increase binding force of the negative electrode active material, in the same manner as the first positive electrode current collector 1112. The first negative electrode current collector may be configured in any of various forms, such as a film, a sheet, a foil, a net, a porous body, a foam body, and a non-woven fabric body.

The second negative electrode 1230 may have the same structure as the first negative electrode 1130.

The first unit cell 1100 and the second unit cell 1200, each of which is configured to have the structure described above, may be connected to each other in series, whereby a bipolar all-solid-state battery 1000 having high energy density may be obtained.

The first porous support layer 1300 may be disposed between the first unit cell 1100 and the second unit cell 1200 in order to connect the unit cells to each other in series.

All materials having electrical conductivity and ionic conductivity may be used as the first porous support layer 1300 in order to connect the first unit cell 1100 and the second unit cell 1200 to each other in series. As an example, the first porous support layer 1300 may include one or more of an olefin-based porous substrate and a sheet or non-woven fabric manufactured using one or more selected from the group consisting of glass fiber and polyethylene. At this time, it is preferable for the first porous support layer 1300 to be an olefin-based porous substrate or a sheet manufactured using one or more selected from the group consisting of glass fiber and polyethylene. Non-woven fabric has high porosity. In order for the first porous support layer 1300 to have predetermined strength, however, a plurality of non-woven fabric layers must be stacked. Under the condition of the same thickness, therefore, the non-woven fabric has a smaller thickness change rate than the porous substrate or the sheet.

Specifically, the first porous support layer 1300 may include a resin, such as a polyolefin-based resin (polyethylene, polypropylene, polybutene, or polyvinyl chloride), or a mixture or copolymer thereof, or may include a resin, such as polyethylene terephthalate, polycycloolefin, polyethersulfone, polyamide, polyimide, polyimide-amide, polyaramide, polycycloolefin, nylon, or polytetrafluoroethylene. Thereamong, the polyolefin-based resin is preferably used, since the thickness of the first porous support layer is reduced, whereby the capacity per volume of the bipolar all-solid-state battery 1000 is increased.

The first porous support layer 1300 may be made of an elastic material capable of relieving stress generated in the bipolar all-solid-state battery 1000, or stress generated in the bipolar all-solid-state battery 1000 may be relieved through pores of the first porous support layer 1300.

The first porous support layer may comprise one or more layers of the porous substrate, the sheet, or the non-woven fabric being stacked.

In the case in which the first porous support layer is formed so as to have multiple layers, the range of stress that can be relieved by the first porous support layer may be extended.

In the case in which the first porous support layer is formed so as to have two or more layers, the respective layers of the first porous support layer may be made of different materials, or the respective layers of the first porous support layer may be made of the same material.

The pore diameter of the first porous support layer 1300 may generally be 0.01 um to 10 um, and the thickness of the first porous support layer may generally be 20 um to 50 um. At this time, porosity of the first porous support layer 1300 may be 30% to 90%.

The first porous support layer 1300 adjusts stress caused by a change in thickness due to lithium deposition. In order for the first porous support layer 1300 to relieve stress, as described above, the elasticity range of the first porous support layer 1300 must be larger than the deformation range thereof due to deposited lithium. The elasticity range of the first porous support layer 1300 is proportional to the thickness and porosity of the first porous support layer 1300.

That is, the elasticity range of the first porous support layer 1300 may be represented as follows.

Elasticity range of first porous support layer = thickness of first porous support layer x porosity of first porous support layer.

At this time, elastic force of the material used for the first porous support layer 1300 must be greater than driving pressure of a jig.

The first porous support layer 1300 may be disposed between the first negative electrode current collector 1132 of the first unit cell 1100 and the second positive electrode current collector 1212 of the second unit cell 1200 such that the first porous support layer 1300, the first negative electrode current collector 1132, and the second positive electrode current collector 1212 serve as a bipolar electrode of the bipolar all-solid-state battery 1000. Since the first unit cell 1100, the second unit cell 1200, and the bipolar electrode are partially shared with each other, as described above, density of the bipolar all-solid-state battery 1000 may be improved. To this end, the first porous support layer 1300 is squeezed between the first unit cell 1100 and the second unit cell 1200.

Uniform pressing force F1 is applied to the first unit cell 1100, the second unit cell 1200, and the first porous support layer 1300 by the jig, and the pressing force is retained even in the case in which the bipolar all-solid-state battery 1000 is used.

In the bipolar all-solid-state battery 1000 according to the present invention, a lithium layer 1400 is formed after being charged and discharged, as shown in FIG. 4. The lithium layer 1400 is formed as the result of lithium being deposited between the first negative electrode 1130 or the second negative electrode 1230 and the first solid electrolyte 1120 or the second solid electrolyte 1220 by charging and discharging. The reason for this is that lithium ions from the first positive electrode 1110 or the second positive electrode 1210 move to the first negative electrode 1130 or the second negative electrode 1230 and are then deposited between the first negative electrode 1130 and the first solid electrolyte 1120 or between the second negative electrode 1230 and the second solid electrolyte 1220.

The lithium layer 1400 is charged under constant current/constant voltage (CC/CV) conditions. At this time, the pressing force F1 applied to the entirety of the lithium secondary battery is changed depending on the amount of lithium formed in the battery, charging and discharging speed, and charging and discharging time. The reason for this is that the lithium layer 1400 is formed, whereby internal pressure F2 is generated.

In the bipolar all-solid-state battery 1000 according to the present invention, stress generated by the internal pressure F2 applied by the lithium layer 1400 is relieved through the first porous support layer 1300. The first porous support layer 1300 applies uniform pressing force F1 to the entirety of the bipolar all-solid-state battery 1000 through a decrease in pore size of the first porous support layer 1300 or deformation of the first porous support layer 1300, including a decrease in thickness thereof.

The decrease in pore size or deformation of the first porous support layer 1300 is adjusted according to formation and/or extinguishment of the lithium layer 1400. For example, when the lithium layer 1400 is formed, whereby internal pressure F2 is generated, the pore size and thickness of the first porous support layer 1300 may be reduced. In addition, when the lithium layer 1400 is extinguished, the first porous support layer 1300 is restored to the initial state thereof. Consequently, the thickness m of the bipolar all-solid-state battery before being pressed and the thickness M of the bipolar all-solid-state battery after being pressed are maintained equal to each other.

In order to uniformly press the bipolar all-solid-state battery 1000 even during use of the unit cells, all of the unit cells of the bipolar all-solid-state battery 1000 may be received in a battery case capable of pressing the unit cells, or the unit cells may be received in a pouch-shaped battery case and then the bipolar all-solid-state battery 1000 may be pressed outside the pouch-shaped battery case.

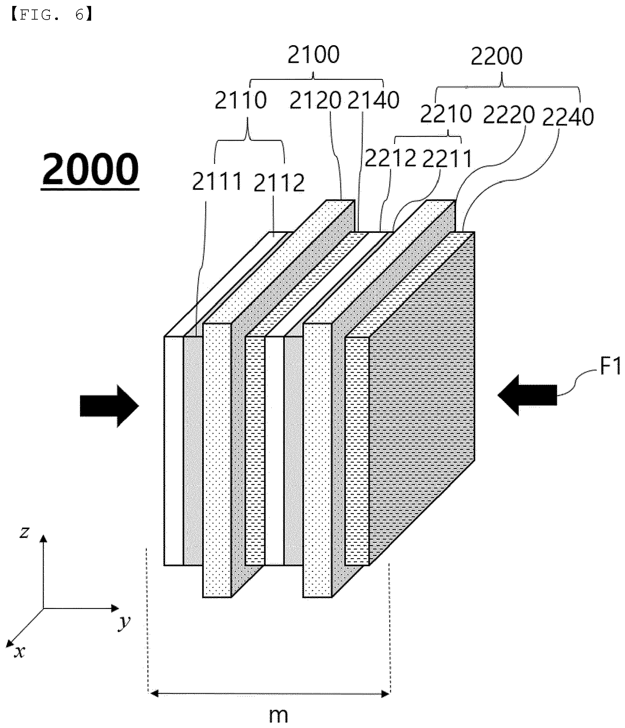

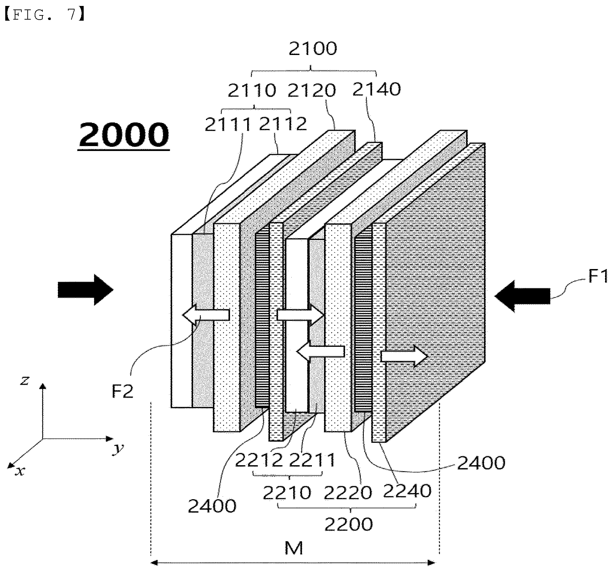

A bipolar all-solid-state battery configured such that (b) two or more unit cells each including a positive electrode, a solid electrolyte, and a second porous support layer are connected to each other in series as a second example of the bipolar all-solid-state battery according to the present invention will be described with reference to FIGS. 6 and 7.

FIG. 6 is a perspective view of a bipolar all-solid-state battery 2000 according to a second example of the present invention before being charged and discharged, and FIG. 7 is a perspective view of the bipolar all-solid-state battery 2000 according to the second example of the present invention after being charged and discharged.

In FIGS. 6 and 7, the unit cells are shown as including a first unit cell 2100 and a second unit cell 2200 for convenience of description. However, the unit cells may include a plurality of first unit cells 2100 and a plurality of second unit cells 2200.

The bipolar all-solid-state battery 2000 according to the second example of the present invention includes a first unit cell 2100 and a second unit cell 2200. The first unit cell 2100 is constituted by a first positive electrode 2110 including a first positive electrode active material 2111 and a first positive electrode current collector 2112; a first solid electrolyte 2120; and a second porous support layer 2140. The second unit cell 2200 is constituted by a second positive electrode 2210 including a second positive electrode active material 2211 and a second positive electrode current collector 2212; a second solid electrolyte 2220; and a second porous support layer 2240. The first unit cell 2100 and the second unit cell 2200 are connected to each other in series via the second porous support layer 2140 and the second porous support layer 2240.

At this time, the second positive electrode current collector 2212 of the second unit cell 2200 may be omitted. In the case in which the second positive electrode current collector 2212 is omitted, the positive electrode 2210 disposed between the second porous support layer 2140 and the solid electrolyte 2220 is constituted by only the positive electrode active material 2211 with the omission of the current collector 2212. As shown in the figures, the first positive electrode 2110, which is the outermost positive electrode, may also be constituted by the positive electrode current collector 2112 and the positive electrode active material 2111 applied to the surface of the positive electrode current collector 2112 that faces the solid electrolyte 2120 or by the positive electrode current collector 2112 having the positive electrode active material applied to two opposite surfaces thereof. Meanwhile, an additional current collector (not shown) may be added to the outer surface of the second porous support layer 2240, which corresponds to the outermost negative electrode.

In addition, as a modification of FIGS. 6 and 7, the bipolar all-solid-state battery according to the present invention may be configured to have a structure in which the first positive electrode, the second positive electrode, and the second negative electrode are not used and only the second porous support layers are stacked in the state in which the solid electrolyte is interposed therebetween. At this time, a positive electrode active material may be applied to one surface of the second porous support layer.

In FIGS. 6 and 7, a structure may be included in which the outermost positive electrode 2110, the outermost solid electrolyte 2120, and the outermost negative electrode 2240 are excluded and in which the second porous support layer, the positive electrode current collector, the positive electrode active material, and the solid electrolyte are stacked, which may be repeated. At this time, the repeated structure may be constituted by the second porous support layer, the positive electrode current collector, the positive electrode active material, and the solid electrolyte or the second porous support layer, the positive electrode active material, and the solid electrolyte. FIGS. 6 and 7 show the most basic structure in which the number of repeatable layers is 1.

The first solid electrolyte 2120 of the first unit cell 2100 is disposed on one surface of the second porous support layer 2140, and the second positive electrode 2210 of the second unit cell 2200 is disposed on the other surface of the second porous support layer 2140, i.e. the surface of the second porous support layer that is opposite the first solid electrolyte 2120.

The first positive electrode 2110 is identical to the first positive electrode 1110 in terms of the material and manufacturing method thereof, the first positive electrode current collector 2112 is identical to the first positive electrode current collector 1112 in terms of the material and manufacturing method thereof, and the first positive electrode active material 2112 is identical to the first positive electrode active material 1111 in terms of the material and manufacturing method thereof.

However, it is preferable for the positive electrode active material 2111 used in the present invention to use a metal oxide including lithium or to include the same in order to deposit lithium on one surface of the second porous support layer 2140.

The first positive electrode 2110 may be configured to have a structure in which the first positive electrode active material 2111 is formed on at least one surface of the first positive electrode current collector 2112. In the case in which the first positive electrode 2110 is located at the outermost side of the bipolar all-solid-state battery 2000, the first positive electrode 2110 may be configured to have a structure in which the first positive electrode active material 2111 is applied to two opposite surfaces of the first positive electrode current collector 2112. In terms of performance of the battery, the structure in which the positive electrode active material is applied to the surface of the positive electrode current collector that faces the solid electrolyte is more preferable than the structure in which the positive electrode active material is applied to two opposite surfaces of the positive electrode current collector.

In the case in which the first positive electrode 2110 faces a second porous support layer of another bipolar all-solid-state battery, the first positive electrode 2110 may be configured to have a structure in which the first positive electrode active material 2111 is applied to only the surface of the first positive electrode current collector 2112 that faces the first solid electrolyte 2120, among the two opposite surfaces of the first positive electrode current collector, or may be constituted by only the first positive electrode active material 2111, on which the other bipolar all-solid-state battery may be stacked.

The second positive electrode 2210 may be made of the same material as the first positive electrode 2110. The second positive electrode 2210 is configured to have a structure in which the second positive electrode current collector 2212 and the second positive electrode active material 2211 are stacked in that order while facing the second porous support layer 2140. The second positive electrode 2210 may include only the second positive electrode active material 2211 without inclusion of the second positive electrode current collector 2212.

Specifically, the second positive electrode active material 2211 faces the second solid electrolyte 2220, and the second positive electrode current collector 2212 faces the second porous support layer 2140. Consequently, the unit cells of the bipolar all-solid-state battery 2000 are connected to each other in series via the second porous support layer 2140. The second porous support layer 2140 serves as a negative electrode, a separator, and a positive electrode, or serves as a negative electrode, a current collector, and a positive electrode.

The first solid electrolyte 2120 and the second solid electrolyte 2220 are identical to the first solid electrolyte 1120 and the second solid electrolyte 1220 in terms of the material and manufacturing method thereof.

A coating layer configured to induce formation of lithium dendrites may be provided on the surface of each of the first solid electrolyte 2120 and the second solid electrolyte 2220 that faces a corresponding one of the second porous support layer 2140 and the second porous support layer 2240.

The coating layer may include a metal in order to improve electrical conductivity and ionic conductivity. The kind of the metal is not limited as long as the metal enables lithium dendrites to be formed between the coating layer and the second porous support layer 2140 or between the coating layer and the second porous support layer 2240 while improving negative-electrode performance of the surface of the second porous support layer 2140 or the second porous support layer 2240 that serves as a negative electrode. The metal may be lithiophilic so as to induce lithium dendrites to be formed between the coating layer and the second porous support layer 2140 or between the coating layer and the second porous support layer 2240.

At this time, the lithiophilic metal may be disposed on the surface of the second porous support layer 2140 or the second porous support layer 2240 that faces the first solid electrolyte 2120 or the second solid electrolyte 2220 such that no lithium dendrites grow in a direction toward the first solid electrolyte 2120 or the second solid electrolyte 2220.

In the case in which the lithiophilic metal is located on the coating layer, lithium plating is performed on the lithiophilic metal, whereby a lithium nucleus is formed, and lithium dendrites grow from the lithium nucleus on only the coating layer.

One or more of a metal and a metal oxide may be selected as the lithiophilic material. For example, the metal may be gold (Au), silver (Ag), platinum (Pt), zinc (Zn), silicon (Si), or magnesium (Mg), and the metal oxide may be copper oxide, zinc oxide, or cobalt oxide, which is a nonmetal.

The surface of the second porous support layer 2140 according to the present invention that faces the first solid electrolyte 2120 may serve as a negative electrode, and the surface of the second porous support layer 2140 that faces the second positive electrode 2210 may serve as a separator and/or a current collector. In the case in which only the second positive electrode active material 2211 is used as the second positive electrode 2210, the surface of the second porous support layer 2140 that faces the second positive electrode 2210 may simultaneously serve as a separator and a current collector.

The second porous support layer 2140 may include a lithium negative electrode or a negative electrode current collector. The lithium negative electrode or the negative electrode current collector included in the second porous support layer 2140 is not particularly restricted as long as the lithium negative electrode or the negative electrode current collector exhibits conductivity while the lithium negative electrode or the negative electrode current collector does not induce any chemical change in a battery to which the lithium negative electrode or the negative electrode current collector is applied. The negative electrode current collector may be a metal or a metal oxide. For example, the negative electrode current collector may be made of copper, stainless steel, aluminum, nickel, titanium, or sintered carbon. Alternatively, the first negative electrode current collector may be made of copper or stainless steel, the surface of which is treated with carbon, nickel, titanium, or silver, or an aluminum-cadmium alloy. In addition, the negative electrode current collector may have a micro-scale uneven pattern formed on the surface thereof so as to increase the force of binding with the portion of the second porous support layer 2140 that serves as a separator, in the same manner as the first positive electrode current collector 2112. The negative electrode current collector may be configured in any of various forms, such as a film, a sheet, a foil, a net, a porous body, a foam body, and a non-woven fabric body. The lithium negative electrode or the negative electrode current collector may be included in the second porous support layer 2140 as non-layer type particles or core-shell type particles.

The lithium negative electrode or the negative electrode current collector of the second porous support layer 2140 according to the present invention may include no separate active material. Since the lithium negative electrode or the negative electrode current collector includes no separate active material, the thickness of the second porous support layer 2140 may be reduced, whereby density of the battery is improved.

In general, the second porous support layer 2140 may be formed so as to have a thickness of 3 um to 500 um. At this time, the thickness of the second porous support layer 2140 may be greater than the thickness of a lithium layer 2400 formed as the result of lithium deposition.

The lithium negative electrode or the negative electrode current collector of the second porous support layer 2140 may be mainly distributed on the surface of the second porous support layer that faces the first solid electrolyte 2120.

An electrically conductive material may be disposed on the surface of the second porous support layer 2140 that faces the second positive electrode 2210. As an example, the surface of the second porous support layer 2140 that faces the second positive electrode 2210 may include one or more of an olefin-based porous substrate and a sheet or non-woven fabric manufactured using one or more selected from the group consisting of glass fiber and polyethylene.

Specifically, the second porous support layer 2140 may include a resin, such as a polyolefin-based resin (polyethylene, polypropylene, polybutene, or polyvinyl chloride), or a mixture or copolymer thereof, or may include a resin, such as polyethylene terephthalate, polycycloolefin, polyethersulfone, polyamide, polyimide, polyimide-amide, polyaramide, polycycloolefin, nylon, or polytetrafluoroethylene. Thereamong, the polyolefin-based resin is preferably used, since the thickness of second porous support layer is reduced, whereby the capacity per volume of the bipolar all-solid-state battery 2000 is increased.

In addition, the surface of the second porous support layer 2140 that faces the second positive electrode 2210 may include an ingredient similar to the ingredient of the first positive electrode current collector 2112.

The second porous support layer 2140 may be made of an elastic material capable of relieving stress generated in the bipolar all-solid-state battery 2000, or stress generated in the bipolar all-solid-state battery 2000 may be relieved through pores of the second porous support layer 2140. The interior of the second porous support layer 2140 made of a metal material may be porous foam.

The pore diameter of the second porous support layer 2140 may generally be 0.01 um to 10 um, and the thickness of the second porous support layer may generally be 20 um to 50 µm.

The second porous support layer 2140 may be disposed between the first solid electrolyte 2120 of the first unit cell 2100 and the second positive electrode current collector 2212 of the second unit cell 2200 such that the second porous support layer 2140 and the second positive electrode current collector 2212 serve as a bipolar electrode of the bipolar all-solid-state battery 2000. Since the bipolar electrode constitutes a portion of the first unit cell 2100 together with the first unit cell 2100 and the second unit cell 2200, as described above, density of the bipolar all-solid-state battery 2000 may be improved. In the case in which the second positive electrode current collector 2212 is not provided, further improvement in density may be achieved.

The second porous support layer 2140 is squeezed between the first unit cell 2100 and the second unit cell 2200.

The second porous support layer 2240 may have the same structure as the second porous support layer 2140.

A separate metal current collector may be further included between the first unit cell 2100 and the second unit cell 2200 according to the present invention. That is, the metal current collector may be included between the second porous support layer 2140 and the second positive electrode 2210. The metal current collector is used to prevent direct movement of lithium ions from the first positive electrode 2110 to the second positive electrode 2210. At this time, the metal current collector may be made of the same material as the first positive electrode current collector 2112. As an example, the metal current collector may be made of stainless steel, aluminum, nickel, or titanium. Alternatively, the metal current collector may be made of aluminum or stainless steel, the surface of which is treated with carbon, nickel, titanium, or silver.

In addition, a separate metal current collector may be further included at the outermost side of the second unit cell 2200. The current collector may be a metal or a metal oxide. For example, the current collector may be made of copper, stainless steel, aluminum, nickel, titanium, or sintered carbon. Alternatively, the current collector may be made of copper or stainless steel, the surface of which is treated with carbon, nickel, titanium, or silver, or an aluminum-cadmium alloy. In addition, the current collector may have a micro-scale uneven pattern formed on the surface thereof so as to increase the force of binding with the second porous support layer 2140. The current collector may be configured in any of various forms, such as a film, a sheet, a foil, a net, a porous body, a foam body, and a non-woven fabric body.

Uniform pressing force F1 is applied to the first unit cell 2100 and the second unit cell 2200 by the jig, and the pressing force is retained even in the case in which the bipolar all-solid-state battery 2000 is used.

In the bipolar all-solid-state battery 2000 according to the present invention, a lithium layer 2400 is formed after being charged and discharged, as shown in FIG. 7. The lithium layer 2400 is formed as the result of lithium being deposited between the second porous support layer 2140 or the second porous support layer 2240 and the first solid electrolyte 2120 or the second solid electrolyte 2220 by charging and discharging.

The lithium layer 2400 is charged under constant current/constant voltage (CC/CV) conditions. At this time, the pressing force F1 applied to the entirety of the lithium secondary battery is changed depending on the amount of lithium formed in the battery, charging and discharging speed, and charging and discharging time. The reason for this is that the lithium layer 2400 is formed, whereby internal pressure F2 is generated.

In the bipolar all-solid-state battery 2000 according to the present invention, stress generated by the internal pressure F2 applied by the lithium layer 2400 is relieved through the second porous support layer 2140 or the second porous support layer 2240. The second porous support layer 2140 or the second porous support layer 2240 applies uniform pressing force F1 to the entirety of the bipolar all-solid-state battery 2000 through a decrease in pore size of the second porous support layer 2140 or the second porous support layer 2240 or deformation of the second porous support layer 2140 or the second porous support layer 2240.

Hereinafter, the present invention will be described based on Experimental Examples in which Examples according to the present invention and Comparative Examples according to the conventional art were compared with each other.

### (Experimental Example 1) Experiment on elastic force of first porous support layer

A change in thickness of a first porous support layer of an all-solid-state battery due to a change in jig pressure during driving of the all-solid-state battery and/or a change in pressure by lithium deposited during charging of the all-solid-state battery was measured. At this time, first porous support layer #1 and first porous support layer #2, which had similar porosities and different thicknesses, and first porous support layer #3, the porosity and thickness of which were different from those of first porous support layer #1 and first porous support layer #2, were used as the first porous support layer.

The first porous support layer was made of polyethylene.

The first porous support layer was punched to a size of 2.5 cm x 2.5 cm, the all-solid-state battery was pressed at 5 MPa, 10 MPa, 15 MPa, and 20 MPa using a jig, and a change in thickness of the first porous support layer was measured in each step. The results of measurement are shown in Table 1 below.

**[Table 1]**

| | Porosity (%) | Thickness before pressing (µm) | Thickness after 5 MPa pressing (µm) | Thickness after 10 MPa pressing (µm) | Thickness after 15 MPa pressing (µm) | Thickness after 20 MPa pressing (µm) |
|---|---|---|---|---|---|---|
| First porous support layer #1 | 46 | 9 | 9 | 9 | 8 | 7 |
| First porous support layer #2 | 49 | 19 | 18 | 17 | 15 | 14 |
| First porous support layer #3 | 80 | 41 | 38 | 36 | 32 | 30 |

With an increase in pressure, the thickness of each first porous support layer was reduced. However, for an ultra-thin porous support layer, like first porous support layer #1, a change in thickness thereof due to pressure was small. On the other hand, for a porous support layer having a large thickness and high porosity, like first porous support layer #3, a change in thickness thereof due to pressure was large. For first porous support layer #1 to first porous support layer #3, deformation of the porous support layer due to a change in fastening pressure during evaluation of the all-solid-state battery and a change in pressure caused by lithium formed during charging of the all-solid-state battery was simulated, and the porous support layer was pressed at 5 MPa once, twice, three times, five times, and ten times to measure the thickness of the porous support layer. The results of measurement are shown in Table 2 below.

At this time, a porous support layer pressed at 20 MPa was used as first porous support layer #1, a porous support layer pressed at 10 MPa was used as first porous support layer #2, wherein a single sheet, a stack of two sheets, and a stack of three sheets were used as first porous support layer #2, and a non-pressed porous support layer and a porous support layer pressed at 10 MPa were used as first porous support layer #3. These first porous support layers were pressed at 5 MPa once, twice, three times, five times, and ten times.

**[Table 2]**

| | Porosity (%) | Initial thickness (µm) | Thickness after 5 MPa pressing, once (µm) | Thickness after 5 MPa pressing, twice (µm) | Thickness after 5 MPa pressing, three times (µm) | Thickness after 5 MPa pressing, five times (µm) | Thickness after 5 MPa pressing, ten times (µm) |
|---|---|---|---|---|---|---|---|
| First porous support layer #1 pressed at 20 MPa | 31 | 7 | 7 | 7 | 7 | 7 | 7 |
| First porous support layer #2 pressed at 10 MPa, one sheet | 43 | 17 | 17 | 17 | 17 | 17 | 17 |
| First porous support layer #2 pressed at 10 MPa, two sheets | 43 | 34 | 34 | 34 | 34 | 34 | 34 |
| First porous support layer #2 pressed at 10 MPa, three sheets | 43 | 52 | 52 | 52 | 52 | 52 | 52 |
| First porous support layer #3 | 80 | 41 | 38 | 37 | 37 | 37 | 36 |
| First porous support layer #3 pressed at 10 MPa | 77 | 36 | 36 | 36 | 36 | 36 | 36 |

In order to reduce stress generated in the bipolar all-solid-state battery, as intended by the present invention, the deformation range of the first porous support layer must be within the elasticity range of the first porous support layer. As can be seen from Table 2, the first porous support layer according to the present invention is a thin-film type porous support layer, wherein a change in thickness of the first porous support layer, i.e. the absolute value of the deformation range of the first porous support layer, is small. In particular, for first porous support layer #1, which is an ultra-thin porous support layer, the theoretically possible deformation range of the first porous support layer is about 4 um. In the case in which a porous support layer having a small thickness is used, therefore, the thickness of the porous support layer is not greatly changed while the porous support layer absorbs stress in the bipolar all-solid-state battery.

In the case in which 1 mAh/cm² of lithium is generally deposited during charging, even though jig pressure is excluded, the lithium is deposited on a negative electrode as a layer having a thickness of 4 um. The present invention relates to a large-capacity battery used in a small-sized device or a vehicle. In general, the capacity of an electrode of the large-capacity battery is greater than the capacity of an electrode of a thin-film battery, and the thickness of lithium deposited on a negative electrode is increased with an increase in capacity of the electrode. When a first porous support layer having a small deformation range, like the present invention, is used in order to relieve stress in the bipolar all-solid-state battery, therefore, a plurality of first porous support layers may be used depending on the thickness of deposited lithium, whereby it is possible to relieve stress in the bipolar all-solid-state battery. It can be seen that, even in the case in which first porous support layer #2 is used as a stack of two sheets or three sheets, as shown in Table 2 above, operation is performed in the same manner as in the case in which first porous support layer #2 is used as a single sheet.

When comparing non-pressed first porous support layer #3 and first porous support layer #3 pressed at 10 MPa with each other, it can be seen that, in the case in which non-pressed first porous support layer #3 was pressed at 5 MPa once, the thickness of the first porous support layer was reduced from 41 um to 38 um, and the thickness of the first porous support layer was continuously reduced with an increase in the number of times of pressing, whereby small deformation of the first porous support layer occurred; however, in the case in which the first porous support layer was primarily pressed at higher pressure than driving pressure, i.e. first porous support layer #3 was pressed at 10 MPa, there was no thickness change even though additional pressing was continuously performed. Consequently, it can be seen that, in the case in which a plurality of thin first porous support layers is stacked, as in first porous support layer #2, or a thick first porous support layer is used after being pressed at higher pressure than driving pressure, as in first porous support layer #3, it is possible to reduce stress in the bipolar all-solid-state battery.

### (Experimental Example 2) Measurement of thickness increase rate

In Experimental Example 2, a battery having the following construction was charged and discharged five times to calculate a thickness change rate thereof. The initial capacity of the battery was measured by charging and discharging the battery under a condition of 60°C. Charging conditions were CC/CV (8.5 V, 0.05 C, 0.01 C current cut off), and discharging conditions were CC (6 V, 0.05 C, 60°C). At this time, the thickness increase rate of the battery was calculated as the thickness of the battery after charging/the thickness of the battery before charging x 100, and the results of calculation are shown in Table 3 below. In addition, the capacity retention of the battery after charging and discharging five times was measured, and the results of measurement are shown in Table 3 below.

The capacity retention of the battery was calculated as follows.

Capacity retention (%) = (capacity at fifth cycle/initial capacity) x 100

### (Example 1-1)

NCM811 (LiNi_{0.8}Co_{0.1}Mn_{0.1}O₂), as a positive electrode active material, argyrodite (Li₆PS₅Cl), as a solid electrolyte, carbon, as a conductive agent, and PTFE, as a binder, were dispersed in anisole in a weight ratio of 77.5:19.5:1.5:1.5, and were stirred to manufacture a positive electrode slurry. The positive electrode slurry was applied to an aluminum current collector having a thickness of 15 um by doctor blade coating, and was dried under vacuum at 100°C for 12 hours to manufacture a positive electrode having a capacity of 2 mAh/cm² .

Argyrodite (Li₆PS₅Cl) and PTFE, as a binder, were mixed in a weight ratio of 95:5 to manufacture a solid electrolyte layer.

Nickel having a thickness of 11 um was used as a negative electrode current collector.

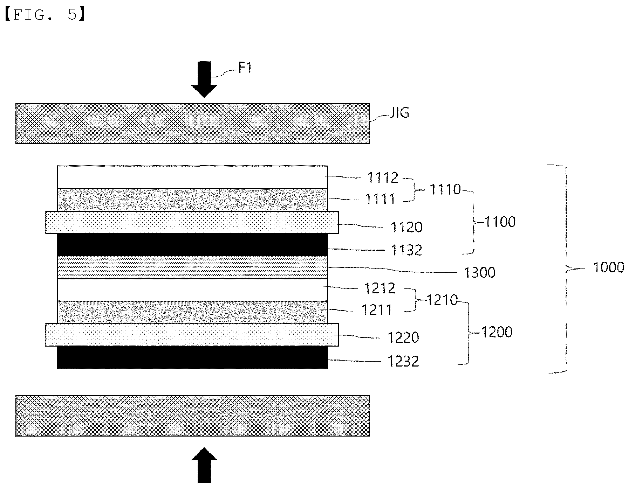

FIG. 5 is a sectional view of an all-solid-state battery 1000 used in Experimental Example 2.

The all-solid-state battery according to Experimental Example 2 is formed by stacking a first unit cell 1100, configured to have a structure in which a first positive electrode 1110 having a first positive electrode active material 1111 formed on one surface of a first positive electrode current collector 1112, a first solid electrolyte layer 1120, and a negative electrode constituted by only a first negative electrode current collector 1132 are stacked, and a second unit cell 1200, configured to have a structure in which a negative electrode constituted by only a second negative electrode current collector 1232 is stacked, in the state in which a first porous support layer 1300 is interposed therebetween. At this time, the first positive electrode active material 1111 is stacked so as to face the first solid electrolyte layer 1120, and the second positive electrode active material 1211 is stacked in the same manner. At this time, the first positive electrode current collector 1112 faces a jig JIG, and the second positive electrode current collector 1212 faces the first porous support layer 1300.

A stack of three sheets of first porous support layer #2 pressed at 10 MPa was used as the first porous support layer 1300 used in Example 1 of the present invention.

### (Example 1-2)

An all-solid-state battery was manufactured and evaluated in the same manner as in Example 1-1 except that a single sheet of first porous support layer #2 pressed at 10 MPa was used as the first porous support layer 1300, unlike Example 1-1.

### (Example 1-3)

An all-solid-state battery was manufactured and evaluated in the same manner as in Example 1-1 except that a positive electrode having a capacity of 3 mAh/cm² was used, unlike Example 1-1.

### (Comparative Example 1-1)

An all-solid-state battery was manufactured and evaluated in the same manner as in Example 1-1 except that no first porous support layer was applied, unlike Example 1-1.

### (Comparative Example 1-2)

An all-solid-state battery was manufactured and evaluated in the same manner as in Example 1-1 except that a single sheet of first porous support layer #2 pressed at 20 MPa was used as the first porous support layer 1300, unlike Example 1-1.

### (Comparative Example 1-3)

An all-solid-state battery was manufactured and evaluated in the same manner as in Example 1-1 except that a single sheet of first porous support layer #3 was used as the first porous support layer 1300, unlike Example 1-1.

**[Table 3]**

| | Thickness increase rate after charging five times (%) | Retention @ 5 cycle (%) |
|---|---|---|
| Example 1-1 | 0.2 | 94.0 |
| Example 1-2 | 0.5 | 95.0 |
| Example 1-3 | 0.7 | 94.5 |
| Comparative Example 1-1 | 7.0 | 89.6 |
| Comparative Example 1-2 | 6.8 | 91.0 |
| Comparative Example 1-3 | 4.2 | 89.8 |

It can be seen from Table 3 that, in the case in which the elastic force of the first porous support layer is greater than battery driving pressure, as in Example 1-1 to Example 1-3 of the present invention, a change in thickness due to lithium formed during charging is absorbed by the first porous support layer, whereby stress in the all-solid-state battery is relieved by the first porous support layer. It can be seen that such relief of a thickness change lasts even after charging and discharging five times. Theoretically, the amount of deformation of the first porous support layer may be calculated based on the thickness and porosity of the first porous support layer, and it can be seen that, even in the case in which the capacity of the positive electrode is 3 mAh/cm², as in Example 1-3, i.e. even in the case in which the capacity of the positive electrode is increased, there is almost no thickness increase rate during charging and discharging.

In contrast, it can be seen that, for Comparative Example 1-1, in which no first porous support layer was used, the thickness of the all-solid-state battery is increased, whereby inner resistance of the all-solid-state battery is increased, and therefore the lifespan of the all-solid-state battery is shorter than the lifespan of the all-solid-state battery according to each of Example 1-1 to Example 1-3. In addition, it can be seen that, for Comparative Example 1-2, in which the first porous support layer configured such that the amount of displacement of the first porous support layer was less than the increased thickness of the first porous support layer was used, and for Comparative Example 1-3, in which the elastic force of the first porous support layer is low, whereby the thickness of the first porous support layer is continuously changed, the effect is insignificant even though the first porous support layer is used. Therefore, it can be seen that the elasticity range of the first porous support layer must be greater than the deformation range of the first porous support layer due to deposited lithium.

That is, since lithium having a thickness of 4 um per unit capacity of the all-solid-state battery, i.e. 1 mAh/cm², is deposited, the deformation range of the first porous support layer may be calculated based on the thickness and porosity of the first porous support layer, and the first porous support layer may be stacked so as to have one or more layers.

### (Experimental Example 3) Experiment on elastic force of second porous support layer

Two kinds of nickel (Ni) foam (nickel foam #1 and nickel foam #2) were selected as follows as the second porous support layer to be used as the porous current collector of the all-solid-state battery. The second porous support layer was punched to a size of 2.0 cm x 2.0 cm and was sequentially pressed at 5 MPa, 10 MPa, 15 MPa, 25 MPa, and 50 MPa, and a change in thickness of the second porous support layer was measured in each step. The results of measurement are shown in Table 4 below.

**[Table 4]**

| | Porosity (%) | Thickness before pressing (µm) | Thickness after 5 MPa pressing (µm) | Thickness after 10 MPa pressing (µm) | Thickness after 15 MPa pressing (µm) | Thickness after 25 MPa pressing (µm) | Thickness after 50 MPa pressing (µm) | Porosity after pressing (%) |
|---|---|---|---|---|---|---|---|---|
| Nickel foam #1 | 95 | 1720 | 386 | 256 | 195 | 178 | 165 | 48 |
| Nickel foam #2 | 90 | 197 | 168 | 136 | 128 | 114 | 109 | 83 |

The thickness of each of nickel foam #1 and nickel foam #2 is gradually decreased with increasing pressure. After 50 MPa pressing, nickel foam #1 has a thickness of 165 um and a porosity of 48%, and nickel foam #2 has a thickness of 109 um and a porosity of 83%.

In order to simulate deformation of the second porous support layer due to a change in fastening pressure during evaluation of the all-solid-state battery and a change in pressure caused by lithium formed during charging of the all-solid-state battery, the second porous support layer was pressed at 5 MPa several times, the second porous support layer pressed several times was pressed at 10 MPa, and the second porous support layer pressed at 10 MPa was sequentially pressed at 15 MPa and 25 MPa. After pressing, the thickness of the second porous support layer was measured. The results of measurement are shown in Table 5 and Table 6 below.

At this time, nickel foam #1, nickel foam #1 pressed at 50 MPa, and nickel foam #2 pressed at 50 MPa were used as the second porous support layer.

**[Table 5]**

| | Porosity (%) | Thickness before pressing (µm) | Thickness after first 5 MPa pressing (µm) | Thickness after second 5 MPa pressing (µm) | Thickness after third 5 MPa pressing (µm) | Thickness after fourth 5 MPa pressing (µm) | Thickness after fifth 5 MPa pressing (µm) | Thickness after sixth 5 MPa pressing (µm) | Thickness after seventh 5 MPa pressing (µm) |
|---|---|---|---|---|---|---|---|---|---|
| Nickel foam #1 | 95 | 1720 | 383 | 360 | 353 | 347 | 344 | 341 | 338 |
| Nickel foam #1 pressed at 50 MPa | 48 | 165 | 165 | 165 | 165 | 165 | 165 | 165 | 165 |
| Nickel foam #2 pressed at 50 MPa | 83 | 109 | 109 | 109 | 109 | 109 | 109 | 109 | 109 |

**[Table 6]**

| | Porosity (%) | Thickness before pressing (µm) | Thickness after eighth 10 MPa pressing (µm) | Thickness after ninth 15 MPa pressing (µm) | Thickness after tenth 25 MPa pressing (µm) |
|---|---|---|---|---|---|
| Nickel foam #1 | 95 | 1720 | 227 | 181 | - |
| Nickel foam #1 pressed at 50 MPa | 48 | 165 | 165 | 165 | 165 |
| Nickel foam #2 pressed at 50 MPa | 83 | 109 | 109 | 109 | 109 |

For unprocessed nickel foam #1, the thickness of the second porous support layer was continuously reduced when the second porous support layer was sequentially pressed at 5 MPa. Such a reduction in thickness occurs because pressure is greater than the elastic force of the second porous support layer, whereby plastic deformation continuously occurs. Particularly, in the case in which pressure was increased to 10 MPa or 15 MPa, strain was continuously increased. That is, in the case in which a battery is manufactured using the second porous support layer, the thickness of the second porous support layer is reduced due to an increase in pressure caused by lithium deposition during continuous charging and discharging, and the thickness of the second porous support layer is not restored even when lithium deposition is relieved. In the case in which the thickness of the second porous support layer is not restored, as described above, the deposited lithium moves to the positive electrode during discharging, whereby the thickness of the lithium layer is reduced. As a result, contact between the second porous support layer, the solid electrolyte, and the positive electrode is reduced, and interfacial resistance in the battery is increased, whereby performance of the all-solid-state battery is deteriorated.

In contrast, it can be seen that, for nickel foam #1 pressed at 50 MPa and nickel foam #2 pressed at 50 MPa, there is no change in thickness even when pressed at 5 MPa several times. The reason for this is that nickel foam #1 pressed at 50 MPa and nickel foam #2 pressed at 50 MPa are already pressed and deformed, whereby strength thereof is increased, and therefore larger pressure is necessary in order to deform the deformed second porous support layer. As can be seen from Table 2 and Table 3 above, nickel foam #1 pressed at 50 MPa and nickel foam #2 pressed at 50 MPa are not deformed even at 25 MPa, and therefore it is possible to sufficiently withstand pressure generated during driving of the all-solid-state battery. In the case in which the second porous support layer is not deformed, as described above, the initial thickness and the initial shape of the second porous support layer may be maintained during charging and discharging, and in the case in which the second porous support layer is used, uniform contact between the positive electrode, the solid electrolyte, and the second porous support layer is maintained, whereby performance of the battery is not deteriorated. At this time, it is more effective to use a support layer capable of maintaining the shape thereof when deformed by pressure, i.e. a support layer having high shape retention, as the second porous support layer.

The second porous support layer may be applied to various other parts used in the battery, and may be made of all materials that can be used in the battery, although not described in the detailed description section of this specification. In addition, the second porous support layer may be applied to batteries using an electrolytic solution or all products capable of storing electricity, in addition to the all-solid-state battery.

### (Experimental Example 4) Measurement of thickness increase rate

In Experimental Example 4, an all-solid-state battery having the following construction was charged and discharged five times to calculate a thickness change rate thereof. The initial capacity of the battery was measured by charging and discharging the battery under a condition of 60°C. Charging conditions were CC/CV (8.5 V, 0.05 C, 0.01 C current cut off), and discharging conditions were CC (6 V, 0.05 C, 60°C). At this time, the thickness increase rate of the battery was calculated as the thickness of the battery after charging/the thickness of the battery before charging x 100, and the results of calculation are shown in Table 4 below.

### (Example 2-1)

NCM811 (LiNi_{0.8}Co_{0.1}Mn_{0.1}O₂), as a positive electrode active material, argyrodite (Li₆PS₅Cl), as a solid electrolyte, carbon, as a conductive agent, and PTFE, as a binder, were dispersed in anisole in a weight ratio of 77.5:19.5:1.5:1.5, and were stirred to manufacture a positive electrode slurry. The positive electrode slurry was applied to an aluminum current collector having a thickness of 15 um by doctor blade coating, and was dried under vacuum at 100°C for 12 hours to manufacture a positive electrode having a capacity of 4 mAh/cm² as the outermost positive electrode.

Argyrodite (Li₆PS₅Cl) and PTFE, as a binder, were mixed in a weight ratio of 95:5 to manufacture a solid electrolyte layer.

Nickel foam #1 pressed at 50 MPa in Experimental Example 3 was used as a second porous support layer.

A positive electrode active material that faces one surface of the second porous support layer was formed using a positive electrode slurry obtained by dispersing and stirring NCM811 (LiNi_{0.8}Co_{0.1}Mn_{0.1}O₂), as a positive electrode active material, argyrodite (Li₆PS₅Cl), as a solid electrolyte, carbon, as a conductive agent, and PTFE, as a binder, in anisole in a weight ratio of 77.5:19.5:1.5:1.5.

In Example 1-1 of the present invention, nickel was used as the outermost negative electrode current collector.

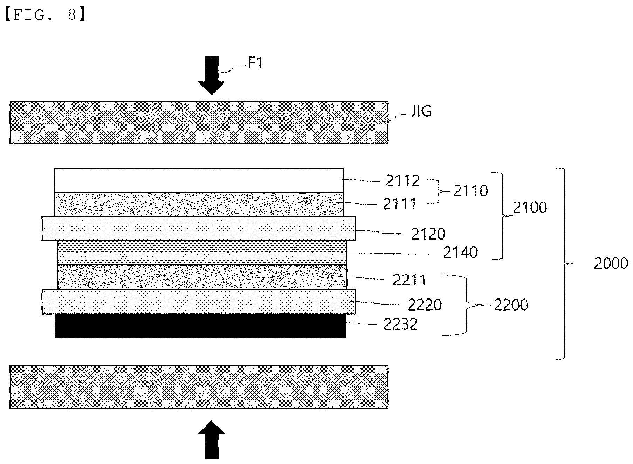

FIG. 8 is a sectional view of an all-solid-state battery 2000 used in Experimental Example 4 of the present invention.

The all-solid-state battery according to Experimental Example 4 is formed by stacking a first unit cell 2100, configured to have a structure in which a first positive electrode 2110 having a first positive electrode active material 2111 formed on one surface of a first positive electrode current collector 2112, a first solid electrolyte 2120, and a second porous support layer 2140 are stacked, and a second unit cell 2200, configured to have a structure in which a second positive electrode active material 2211, a second solid electrolyte 2220, and a second negative electrode current collector 2232 are stacked. At this time, the first positive electrode active material 2111 faces the first solid electrolyte 2120. The all-solid-state battery is pressed by a jig JIG, and the first positive electrode current collector 2112 and the second negative electrode current collector 2232 face the jig JIG.

The all-solid-state battery of FIG. 8 was manufactured using the material according to Example 2-1.

The jig was fastened such that a force of 5 MPa was applied to the all-solid-state battery, and then charging and discharging were performed.

### (Example 2-2)

An all-solid-state battery was manufactured and evaluated in the same manner as in Example 2-1 except that nickel foam #2 pressed at 50 MPa was used as the second porous support layer, unlike Example 2-1.

### (Example 2-3)

An all-solid-state battery was manufactured and evaluated in the same manner as in Example 2-1 except that the capacity of the positive electrode was 6 mAh/cm² and nickel foam #2 pressed at 50 MPa was used as the second porous support layer, unlike Example 2-1.

### (Comparative Example 2-1)

An all-solid-state battery was manufactured and evaluated in the same manner as in Example 2-1 except that nickel foil having a thickness of 10 um was used as the second porous support layer, unlike Example 2-1.

### (Comparative Example 2-2)

An all-solid-state battery was manufactured and evaluated in the same manner as in Example 2-1 except that the capacity of the positive electrode was 6 mAh/cm² and nickel foil having a thickness of 10 um was used as the second porous support layer, unlike Example 2-1.

**[Table 7]**

| | Nickel foam | Positive electrode (mAh/ cm²) | Thickness increase rate after charging once (%) | Thickness increase rate after charging five times (%) |
|---|---|---|---|---|
| Example 2-1 | 1 | 4 | 0.2 | 0.3 |
| Example 2-2 | 2 | 4 | 0.5 | 0.5 |
| Example 2-3 | 3 | 6 | 0 | 0.2 |
| Comparative Example 2-1 | Nickel foil | 4 | 11.4 | 13.2 |
| Comparative Example 2-2 | Nickel foil | 6 | 15.8 | 17.5 |

It can be seen from Table 7 that, in the case in which the elastic force of the second porous support layer is greater than battery driving pressure, as in Example 2-1 to Example 2-3 of the present invention, a change in thickness due to lithium formed during charging is absorbed by the second porous support layer, whereby stress in the all-solid-state battery is relieved by the second porous support layer. It can be seen that such relief of thickness change lasts even after charging and discharging five times. It can be seen therefrom that the amount of deformation of the nickel foam is more sufficient than stress due to an increase in thickness of lithium deposited during charging as well as the elastic force of the second porous support layer. Theoretically, the amount of deformation of the second porous support layer may be predicted based on the thickness and porosity thereof, and it can be seen that, even in the case in which the capacity of the positive electrode is 6 mAh/cm², as in Example 2-3, i.e. even in the case in which the capacity of the positive electrode is increased, the thickness of the second porous support layer is 109 um and the porosity of the second porous support layer is 83%, i.e. there is almost no thickness increase rate during charging and discharging.

In contrast, it can be seen that, for Comparative Example 2-1, in which general nickel foil was used, an increase in thickness due to lithium deposited even by one-time charging was not relieved, and therefore the thickness was increased by 11.4%. Such a thickness change rate is increased whenever the number of times of charging is increased. In addition, it can be seen that, for Comparative Example 2-2, in which the capacity of the positive electrode was increased, the thickness change rate is further increased to 15.8%, whereby stress due to lithium deposition was not relieved. Therefore, it can be seen from the above results that the second porous support layer according to the present invention is effective in minimizing the thickness change rate of the all-solid-state battery, which is operated based on a lithium plating/stripping mechanism, due to charging and discharging of the battery.

In addition, the present invention provides a battery module including the bipolar all-solid-state battery, a battery pack including the bipolar all-solid-state battery, and a device including the battery pack. The battery module, the battery pack, and the device are well known in the art to which the present invention pertains, and thus a detailed description thereof will be omitted.

For example, the device may be a laptop computer, a netbook computer, a tablet PC, a mobile phone, an MP3 player, a wearable electronic device, a power tool, an electric vehicle (EV), a hybrid electric vehicle (HEV), a plug-in hybrid electric vehicle (PHEV), an electric bicycle (E-bike), an electric scooter (E-scooter), an electric golf cart, or an energy storage system. However, the present invention is not limited thereto.

Those skilled in the art to which the present invention pertains will appreciate that various applications and modifications are possible within the category of the present invention based on the above description.

### (Description of Reference Symbols)

10, 1000, 2000: Bipolar all-solid-state batteries
100, 1100, 2100: First unit cells
110, 1110, 2110: First positive electrodes
111, 1111, 2111: First positive electrode active materials
112, 1112, 2112: First positive electrode current collectors
120, 1120, 2120: First solid electrolytes
130, 1130: First negative electrodes
131, 1131: First negative electrode active materials
132, 1132: First negative electrode current collectors
2140, 2240: Second porous support layers
200, 1200, 2200: Second unit cells
210, 1210, 2210: Second positive electrodes
211, 1211, 2211: Second positive electrode active materials
212, 1212, 2212: Second positive electrode current collectors
220, 1220, 2220: Second solid electrolytes
230, 1230: Second negative electrodes
231, 1231: Second negative electrode active materials
232, 1232: Second negative electrode current collectors
300: Bipolar electrode
1300: First porous support layer
400, 1400, 2400: Lithium layers
F1: Pressing force
F2: Internal pressure
m: Thickness before pressing
M: Thickness after pressing
JIG: Jig

### [Industrial Applicability]

The present invention relates to a bipolar all-solid-state battery including a porous support layer, and more particularly a bipolar all-solid-state battery configured such that (a) two or more unit cells each including a positive electrode, a solid electrolyte, and a negative electrode are connected to each other in series and a first porous support layer is provided at the middle of the interface therebetween or (b) two or more unit cells each including a positive electrode, a solid electrolyte, and a second porous support layer are connected to each other in series, and therefore the present invention has industrial applicability.

## Claims

1. A bipolar all-solid-state battery including:
(a) two or more unit cells each comprising a positive electrode, a solid electrolyte, and a negative electrode being connected to each other in series, and a first porous support layer provided at a middle of an interface therebetween; or
(b) two or more unit cells each comprising a positive electrode, a solid electrolyte, and a second porous support layer being connected to each other in series.

2. The bipolar all-solid-state battery according to claim 1, wherein the negative electrode of one of the unit cells is disposed on one surface of the first porous support layer, and
wherein the positive electrode of another of the unit cells is disposed on a surface opposite to the one surface of the first porous support layer.

3. The bipolar all-solid-state battery according to claim 1, wherein the negative electrode is a lithium metal or a current collector having no active material layer.

4. The bipolar all-solid-state battery according to claim 1, wherein a surface of the second porous support layer that faces the solid electrolyte serves as a negative electrode, and
wherein a surface of the second porous support layer that faces the positive electrode serves as a separator.

5. The bipolar all-solid-state battery according to claim 1, wherein the second porous support layer comprises a lithium negative electrode or a negative electrode current collector.

6. The bipolar all-solid-state battery according to claim 5, wherein the negative electrode current collector is a metal or a metal oxide.

7. The bipolar all-solid-state battery according to claim 5, wherein the lithium negative electrode or the negative electrode current collector does not comprise a separate active material layer.

8. The bipolar all-solid-state battery according to claim 1, wherein the first porous support layer comprises one or more selected from:
an olefin-based porous substrate; and
a sheet or non-woven fabric manufactured using one or more selected from a group consisting of glass fiber and polyethylene.

9. The bipolar all-solid-state battery according to claim 8, wherein the first porous support layer comprises one or more layers of the olefin-based porous substrate, the sheet, or the non-woven fabric being stacked.

10. The bipolar all-solid-state battery according to claim 9, wherein,
when the first porous support layer comprises two or more layers,
the respective layers of the first porous support layer are formed of different materials, or
formed of the same material.

11. The bipolar all-solid-state battery according to claim 1, wherein each of the first porous support layer and the second porous support layer is configured such that a thickness thereof is reduced when pressure is applied thereto and the thickness thereof is restored when the pressure is relieved, thereby adjusting stress in the all-solid-state battery.

12. The bipolar all-solid-state battery according to claim 11, wherein the pressure is generated as a result of:
lithium deposition between the negative electrode and the solid electrolyte by lithium ions moved from the positive electrode to the negative electrode by charging; or
lithium deposition between the second porous support layer and the solid electrolyte.

13. The bipolar all-solid-state battery according to claim 12, wherein the first porous support layer is configured to adjust stress caused by a change in thickness due to the lithium deposition.

14. The bipolar all-solid-state battery according to claim 12, wherein a thickness of the second porous support layer is greater than a thickness of deposited lithium.

15. The bipolar all-solid-state battery according to claim 11, wherein each of the first porous support layer and the second porous support layer is configured to adjust the stress in proportion to a thickness and porosity thereof.

16. The bipolar all-solid-state battery according to claim 1, wherein the first porous support layer has a thickness of 20 um to 50 um.

17. The bipolar all-solid-state battery according to claim 1, wherein the positive electrode comprises:
a positive electrode current collector; and
a positive electrode active material applied to one surface of the positive electrode current collector.

18. The bipolar all-solid-state battery according to claim 17, wherein the positive electrode active material faces the solid electrolyte, and
wherein the positive electrode current collector faces the first porous support layer and the second porous support layer.

19. The bipolar all-solid-state battery according to claim 1, wherein the negative electrode of one of the unit cells disposed on one surface of the first porous support layer is a lithium metal having no separate active material layer, and
wherein the positive electrode of another of the unit cells disposed on a surface opposite to the one surface of the first porous support layer is a positive electrode current collector.

20. The bipolar all-solid-state battery according to claim 1, wherein the positive electrode disposed between the second porous support layer and the solid electrolyte, among the positive electrodes, is constituted by only a positive electrode active material, and
wherein an outermost positive electrode comprises a positive electrode current collector and a positive electrode active material applied to a surface of the positive electrode current collector that faces the solid electrolyte.

21. The bipolar all-solid-state battery according to claim 1, wherein the two or more unit cells are received in a pouch-shaped battery case.

22. The bipolar all-solid-state battery according to claim 1, wherein the two or more unit cells are pressed by an external jig during charging and discharging thereof.

23. The bipolar all-solid-state battery according to claim 1, wherein the bipolar all-solid-state battery comprising the two or more unit cells each comprising the positive electrode, the solid electrolyte, and the second porous support layer being connected to each other in series, comprises one or more unit stacks repeatedly provided between an outermost positive electrode and a solid electrolyte that faces the outermost positive electrode and an outermost negative electrode, the unit stack comprising a second porous support layer, a positive electrode active material, and a solid electrolyte.

24. The bipolar all-solid-state battery according to claim 1, wherein the bipolar all-solid-state battery comprising the two or more unit cells each comprising the positive electrode, the solid electrolyte, and the second porous support layer are connected to each other in series, comprises one or more unit stacks repeatedly provided between an outermost positive electrode and a solid electrolyte that faces the outermost positive electrode and an outermost negative electrode, the unit stack comprising a second porous support layer, a positive electrode current collector, a positive electrode active material, and a solid electrolyte.
